# EUROPÄISCHE PATENTSCHRIFT

(11) **EP 4 353 379 B1**
(45) Veröffentlichungstag und Bekanntmachung des Hinweises auf die Patenterteilung: **25.03.2026**
(21) Anmeldenummer: 23203434.8
(22) Anmeldetag: 13.10.2023
(51) Int. Cl.: B21D 43/14, B65G 47/248, B21D 43/12, B21D 43/26

(54) **WENDEVORRICHTUNG MIT EINER ANSCHLAGANORDNUNG**
TURNING DEVICE WITH A STOP ARRANGEMENT
DISPOSITIF DE RETOURNEMENT AVEC UN DISPOSITIF DE BUTÉE

(30) Priorität: 13.10.2022 AT 507962022
(43) Veröffentlichungstag der Anmeldung: 17.04.2024
(73) Patentinhaber: TRUMPF Maschinen Austria GmbH & Co. KG., 4061 Pasching (AT)
(72) Erfinder: VIDOTTO, Giovanni, 10023 Chieri (IT); AUZINGER, Michael, 4040 Linz (AT)
(74) Vertreter: Burger, Hannes

(56) Entgegenhaltungen:
- CN-A- 107 352 259
- CN-A- 110 342 222
- CN-A- 110 857 179
- CN-A- 111 805 494
- CN-U- 208 775 765
- DE-A1- 3 009 615
- JP-U- S54 128 271

## Beschreibung

Die Erfindung betrifft eine Vorrichtung zum Wenden von plattenförmigen Bauteilen, insbesondere Blechtafeln, umfassend; eine Rotationseinheit; wobei die Rotationseinheit dazu ausgebildet ist, ein Bauteil bezüglich einer Rotationsachse in einem Wendevorgang zu wenden; sowie eine Fördereinheit, wobei die Fördereinheit in der Rotationseinheit aufgenommen ist und mittels der Rotationseinheit bezüglich der Rotationsachse rotierbar ist. Die Fördereinheit umfasst zumindest ein erstes Fördermittel und ein bezüglich der Rotationsachse gegenüberliegend angeordnetes zweites Fördermittel, wobei das erste Fördermittel eine erste Förderebene definiert und das zweite Fördermittel eine parallel zur ersten Förderebene angeordnete zweite Förderebene definiert, wobei die Fördereinheit dazu ausgebildet ist, das Bauteil zwischen der ersten und zweiten Förderebene bezüglich einer parallel zur Rotationsachse angeordneten Förderrichtung aufzunehmen, sodass das Bauteil zwischen dem ersten und zweiten Fördermittel für den Wendevorgang aufgenommen ist.

Eine Rotationseinheit ist beispielsweise in der JP2000079526 A offenbart, wobei in der Rotationseinheit einzelne, drehbar gelagerte Förderrollen angeordnet sind, über welcher Rollen ein Werkstück in die Rotationseinheit geführt werden kann. Dabei sind zwei sich gegenüberliegende Anordnungen von Förderrollen vorgesehen, wobei das Werkstück zwischen den beiden Anordnungen für die Rotation aufgenommen wird. Nach einer Rotation bzw. einem Wenden des Werkstückes kommt das Werkstück auf die jeweils gegenüberliegende Anordnung zur Anlage, von welcher dieses wieder einer Anlage nach dem Wenden zugeführt werden kann. Ferner kann in der Vorrichtung ein Stopper vorgesehen, an welchen das Werkstück im Wendevorgang anschlägt, bzw. aufgrund der Schwerkraft in dessen Richtung gleitet.

In der JPS 54128271 U und CN 110342222 A sind Wendevorrichtungen offenbart, die gegenüberliegende Fördereinheiten für Werkstücke aufweisen, sowie Begrenzungselemente zur Begrenzung der Werkstücke in der Wendevorrichtung, die in den Randbereichen der Fördereinheiten angeordnet sind.

In der CN 110857179 A ist eine Wendevorrichtung mit gegenüberliegenden Rollenförderelementen offenbart, wobei einzelne Begrenzungselemente vorgesehen sind, die in Aussparungen zwischen der Rollenförderelemente angeordnet sind und entlang der Aussparungen zwischen den Rollenförderern verstellbar sind.

In der DE 3009615 A1 und der CN 107352259 A sind Wendevorrichtungen für Werkstücke offenbart, in welcher das Werkstück zwischen Rollen-Fördereinheiten für den Wendevorgang aufgenommen wird, wobei in den Randbereichen der Fördereinheiten verstellbare Begrenzungseinheiten für das Werkstück angeordnet sind, welche zwischen den Fördereinheiten in Richtung des Werkstückes verstellt werden können.

In der CN 208775765 U und in der CN111805494 A sind Wendevorrichtungen offenbart, die gegenüberliegende Fördereinheiten mit Rollenförderern umfassen, wobei die Rollenförderer mittels der Wendevorrichtung um eine Achse senkrecht zu einer Förderrichtung der Rollenförderer rotierbar sind. Ferner sind Begrenzungselemente für das Werkstück offenbart, welche an unterschiedlichen Positionen zwischen den einzelnen Rollenförderern entlang der Förderrichtung montiert werden können und sich zwischen den Rollenförderern in einen Aufnahmebereich für das Werkstück erstrecken, um es für den Wendevorgang zu sichern. Die Begrenzungselemente der CN 208775765 U können zudem in einer Höhenposition in Richtung des Aufnahmebereiches verstellt werden.

Nachteilig bei derartigen Wendeeinheiten aus dem Stand der Technik ist, dass die Bauteile aufgrund von unterschiedlichen Abmessungen und deren Reibungs- bzw. Gleitverhalten im Wendevorgang nicht zur vollständigen Anlage der Werkstücke an den Stopper bzw. Anschlagelemente kommt und diese verdreht in Richtung der Anschläge gleiten, aufgrund dessen es zu Beschädigungen der Werkstücke, sowie einer nicht optimalen Ausrichtung bei der Weiterführung aus der Wendeeinheit kommt.

Aufgabe der vorliegenden Erfindung war es, die Nachteile des Standes der Technik zu überwinden und eine Vorrichtung zum Wenden von Bauteilen zur Verfügung zu stellen, mittels derer ein Benutzer in der Lage ist, einen verbesserten Wendevorgang vorzunehmen.

Diese Aufgabe wird durch eine Vorrichtung gemäß den Ansprüchen gelöst.

Die erfindungsgemäße Vorrichtung zeichnet sich dadurch aus, dass die Fördereinheit zumindest eine Anschlaganordnung zur Anlage des Bauteils im Wendevorgang umfasst, wobei mittels der Anschlaganordnung eine erste Anschlagebene bzw. Anschlagfläche zwischen dem ersten und zweiten Fördermittel ausbildbar ist und wobei die Anschlaganordnung parallel bezüglich der ersten Förderebene und quer bzw. senkrecht zur Rotationsachse verstellbar ist.

Mittels der erfindungsgemäßen Maßnahme ist es möglich, die Anschlaganordnung an das Bauteil heranzuführen, sodass einer laterale Verschiebung des Bauteils in der Rotationseinheit im Wendevorgang vorgebeugt werden kann. Ferner weist die erfindungsgemäße Maßnahme den Vorteil auf, das Bauteil in der Fördereinheit vor bzw. aber auch nach dem Wendevorgang ausrichten zu können.

Mit einer Anschlagebene ist jener Bereich der Anschlaganordnung gemeint, welcher als wirksame Kontaktfläche zwischen den beiden Förderebenen der Fördermitteln zur Anlage des Bauteils dient.

Bezüglich der Verstellung quer zur Rotationsachse kann vorgesehen sein, dass die Anschlaganordnung über eine gesamte Breite der Fördereinheit verstellbar ist.

Die Anschlaganordnung ist zudem relativ bezüglich einer senkrechten Richtung zur ersten Förderebene verstellbar. Somit kann zum einen ein Anpassen der Anschlaganordnung senkrecht zwischen den beiden Förderebenen ermöglicht werden, sowie auch ein Verstellen der Anschlaganordnung außerhalb der Förderebenen, sodass diese aus dem Aufnahmebereich für das Bauteil zwischen den beiden Förderebenen verfahren werden kann.

Weiters ist vorgesehen, dass die Fördereinheit eine Kulissenanordnung umfasst, wobei die Anschlaganordnung mit der Kulissenanordnung derart gekoppelt ist, dass bei der Verstellung der Anschlaganordnung zur Rotationsachse, die Anschlaganordnung mittels der Kulissenanordnung bezüglich der senkrechten Richtung verstellbar ist. Diese Ausgestaltung bringt den Vorteil mit sich, dass bezüglich der Verstellung entlang der senkrechten Richtung kein eigener Antrieb für die Anschlaganordnung vorgesehen werden muss und dies mittels der Verstellung quer zur Rotationsachse erfolgt.

Ferner kann vorgesehen sein, dass zumindest eines der Fördermittel, umfassend das zumindest eines der beiden Fördermittel einzelne stabförmige Förderelemente umfasst; wobei die stabförmigen Förderelemente quer zur Rotationsachse angeordnet sind.

Zudem kann vorgesehen sein, dass die Anschlaganordnung einzelne Anschlagelemente umfasst, wobei die Anschlagelemente senkrecht zur ersten Förderebene angeordnet sind und bezüglich einer Richtung parallel zu der Rotationsachse beabstandet zueinander angeordnet sind, sodass die die erste Anschlagebene mittels der Anschlagelemente ausbildbar ist.

Bevorzugt kann der Abstand der einzelnen Anschlagelemente zueinander einem Abstand der einzelnen stabförmigen Förderelemente zueinander entsprechen. Weiters sind die Anschlagelemente bevorzugt bezüglich zu der Förderebene gleichmäßig beabstandet ausgebildet (bzw. parallel zu der Förderebene angeordnet).

Eine vorteilhafte Ausführungsform sieht vor, dass die einzelnen Anschlagelemente jeweils zwischen den stabförmigen Förderelementen hindurchführbar sind. Diesbezüglich kann eine Verstellvorrichtung für die Anschlagelemente vorgesehen sein, oder eine zuvor erwähnte Kulissenanordnung. So können beispielsweise die Anschlagelemente parallel zur Förderebene quer zur Rotationsachse verstellbar sein und in dieser Richtung zwischen die stabförmigen Förderelemente hindurchführbar, aber auch in der senkrecht Richtung auf die Förderebenen. Diesbezüglich weisen die stabförmigen Förderelemente (bezüglich ihrer jeweiligen Beabstandung in Förderrichtung) zueinander gleichmäßige Zwischenräume auf, durch welche die jeweiligen Anschlagelemente hindurchführbar sind. Vorzugsweise kann ein Anschlagelement pro Zwischenraum vorgesehen sein.

In einer Weiterbildung kann vorgesehen sein, dass zumindest eines der beiden Fördermittel, umfassend das erste und zweite Fördermittel, relativ bezüglich seiner Förderebene entlang einer Förderrichtung in der Fördereinheit verfahrbar ausgebildet ist, sodass das Bauteil zusammen mit dem verfahrbaren Fördermittel bewegbar ist. Mittels eines verfahrbaren Fördermittels ist eine schonende Aufnahme eines Bauteils möglich, sowie eine verbesserte Förderung dessen durch die Wendevorrichtung.

Ferner kann vorgesehen sein, dass die Fördereinheit zumindest eine Umlenkanordnung aufweist, wobei mittels der Umlenkanordnung das zumindest eine verfahrbare Fördermittel derart umlenkbar ist, dass es vom jeweils anderen, gegenüberliegenden Fördermittel distanzierbar ist. So kann zumindest ein Teilabschnitt des verfahrbaren Fördermittels außerhalb der jeweiligen Förderebene verlagerbar ausgebildet sein. Mittels dieser Ausgestaltung kann ein verbessertes Zuführen/einziehen von Bauteilen in der Fördereinheit realisiert werden.

Bevorzugt kann dabei vorgesehen sein, dass das zumindest eine verfahrbare Fördermittel mittels eines Zugmitteltriebes verfahrbar ausgebildet ist. So kann auch ein umlaufendes Fördermittel vorgesehen sein.

Besonders bevorzugt kann vorgesehen sein, dass das verfahrbare Fördermittel bürstenartige Elemente aufweist, wobei die bürstenartigen Elemente zur Aufnahme des Bauteils vorgesehen sind und sich senkrecht von dem verfahrbaren Fördermittel in Richtung des aufzunehmenden Bauteils erstrecken. Mittels der bürstenartigen Elemente ist ein vereinfachtes Handhaben von unterschiedlichen Bauteildicken möglich. Ferner ist ein wesentlich schonenderes Schieben der Bauteile mittels der Anschlaganordnung auf den bürstenartigen Elementen in der Fördereinheit möglich. Ebenso ist der Widerstand des Bauteils gegen ein Ausrichten durch die Anschlaganordnung bezüglich der Förderrichtung oder der Rotationsache wesentlich geringer.

Eine mögliche Ausgestaltung sieht vor, dass die Anschlaganordnung bezüglich einer Richtung parallel zu der Rotationsachse über eine Gesamtlänge der Fördereinheit angeordnet ist. somit kann ein Bauteil zuverlässig innerhalb der Fördereinheit unabhängig von dessen genauen Position ausgerichtet werden oder im Wendevorgang anschlagen. Mit einer Gesamtlänge der Fördereinheit ist im Wesentlichen jene Länge gemeint, in welcher sich das Bauteil in Kontakt mit den Fördermitteln zwischen den beiden Förderebenen befinden kann. Somit erstreckt sich die wirksame Kontaktfläche der Anschlaganordnung über die gesamte Förderlänge des Fördermittels.

Eine weitere Ausgestaltung sieht vor, dass sich die Anschlaganordnung bezüglich einer Richtung parallel zu der Rotationsachse über zumindest zwei stabförmige Förderelemente erstreckt. Besonders bei der Anwendung von einzelnen Anschlagelementen können somit zumindest zwei Anschlagelemente vorgesehen sein.

In einer vorteilhaften Weiterbildung kann vorgesehen sein, dass die Fördereinheit eine zweite Anschlaganordnung umfasst, wobei mittels der zweiten Anschlaganordnung eine zweite Anschlagebene zwischen dem ersten und zweiten Fördermittel ausbildbar ist und wobei die zweite Anschlaganordnung bezüglich der Rotationsachse der ersten Anschlaganordnung gegenüberliegend angeordnet ist. Somit ist eine zweite Anschlagebene, welche bezüglich der Rotationsachse der ersten Anschlagebene gegenüberliegt, ausbildbar. Mittels dieser Ausgestaltung kann ein Bauteil von beiden Seiten in der Rotationseinheit ausgerichtet, bzw. auch in einem Wendevorgang gehalten werden. Insbesondere wenn die Rotationseinheit über einen größeren Drehbereich als 180° verfügt.

Bevorzugt kann dabei vorgesehen sein, dass die zweite Anschlaganordnung parallel bezüglich der ersten Förderebene und quer zur Rotationsachse verstellbar ausgebildet ist. Beispielsweise kann ein Bauteil durch diese Maßnahme auch in der Fördereinheit bzw. Rotationseinheit zentriert werden.

Eine weitere mögliche Ausführungsform sieht vor, dass die Fördereinheit zwischen dem ersten und zweiten Fördermittel eine seitliche Zugangsöffnung aufweist, wobei mittels der Zugangsöffnung ein Zuführen des Bauteils zwischen der ersten und zweiten Förderebene quer zur Rotationsachse ermöglicht ist. Die Zugangsöffnung kann bevorzugt bezüglich der Rotationsachse der ersten Anschlaganordnung gegenüberliegend ausgebildet sein. In der Zugangsöffnung können beispielsweise Bauteile manuell der Vorrichtung zugeführt werden, unabhängig von benachbarten Anlagen, welche Bauteile in Förderrichtung zuführen. Weiters kann vorgesehen sein, dass mittels der Anschlaganordnung Bauteile über die Zugangsöffnung ausgegeben werden können, indem diese mittels der Anschlaganordnung in Richtung der Zugangsöffnung verschoben werden.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Wendevorrichtung mit einer erfindungsgemäßen Anschlaganordnung;
- Fig. 2: eine mögliche Ausführung einer Rotationseinheit in Draufsicht;
- Fig. 3: eine mögliche Ausführung einer erfindungsgemäßen Vorrichtung;
- Fig. 4: eine Ausführungsform einer Fördereinheit nach Fig. 3 in Seitenansicht;
- Fig. 5: eine Ausführungsform einer Fördereinheit;
- Fig. 6: eine Ausführungsform einer Anschlaganordnung mit einer Kulisse;
- Fig. 7: die Anschlaganordnung nach Fig. 6 in einer weiteren Stellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

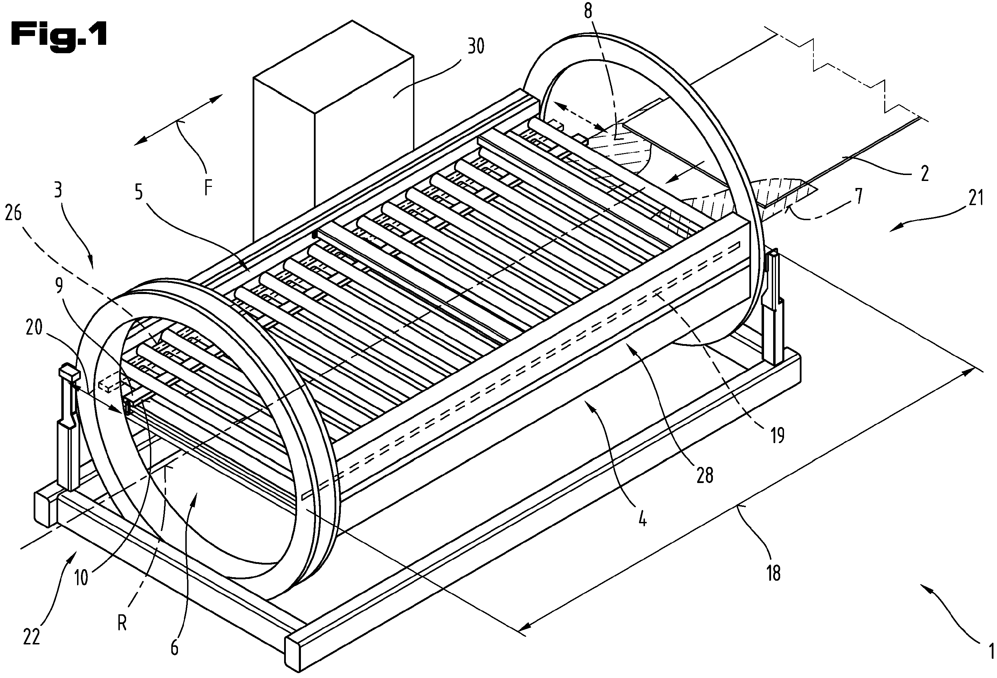

In Fig. 1 ist eine Vorrichtung 1 zum Wenden von Bauteilen 2 dargestellt. Die Vorrichtung 1 umfasst eine Rotationseinheit 3 die dazu ausgebildet ist, ein Bauteil 2 bezüglich einer Rotationsachse R in einem Wendevorgang zu wenden. Weiters umfasst sie eine Fördereinheit 4, wobei die Fördereinheit 4 in der Rotationseinheit 3 aufgenommen ist und mittels der Rotationseinheit 3 bezüglich der Rotationsachse R rotierbar ist.

Die Fördereinheit 4 umfasst zumindest ein erstes Fördermittel 5 und ein bezüglich der Rotationsachse gegenüberliegend angeordnetes zweites Fördermittel 6, wobei das erste Fördermittel 5 eine erste Förderebene 7 definiert und das zweite Fördermittel 6 eine parallel zur ersten Förderebene 7 angeordnete zweite Förderebene 8 definiert. Die Fördereinheit 4 ist dazu ausgebildet, das Bauteil 2 zwischen der ersten und zweiten Förderebene 7,8 bezüglich einer parallel zur Rotationsachse R angeordneten Förderrichtung F aufzunehmen, sodass das Bauteil 2 zwischen dem ersten und zweiten Fördermittel 5,6 für den Wendevorgang aufgenommen ist.

Dabei sei zum erleichterten Verständnis erwähnt, dass mit den Förderebenen 7,8 die jeweils von den Fördermitteln 5,6 ausgebildeten Auflageebenen gemeint sind, an welche das Bauteil 2 beim Befördern in die Vorrichtung 1 geführt ist, bzw. welche im Wendevorgang selbst dem Bauteil 2 eben an seinen beiden Flachseiten direkt gegenüberliegen.

Erfindungsgemäß ist zumindest eine erste Anschlaganordnung 9 vorgesehen, wobei mittels der Anschlaganordnung 9 eine erste Anschlagebene 10 bzw. eine Anschlagfläche zwischen dem ersten und zweiten Fördermittel 5,6 ausbildbar ist. Die Anschlagebene 10 kann bevorzugt senkrecht zu der ersten Förderebene 7 ausgerichtet sein und/oder parallel zur Rotationsachse R angeordnet sein. Die Anschlaganordnung 9 ist zur Anlage des Bauteils 2 im Wendevorgang vorgesehen und ist zudem parallel bezüglich der ersten Förderebene 7 und quer bzw. senkrecht zur Rotationsachse R verstellbar ausgebildet. Diesbezüglich ist eine quer zur Rotationsachse R und parallel zur ersten Förderebene 7 angeordnete Bewegungsrichtung 20 angedeutet.

Die Anschlaganordnung 9 bildet dadurch einen Anschlag für das Bauteil 2, sodass dieses im Wendevorgang aufgrund der Schwerkraft nicht zwischen den beiden Förderebenen herausgleiten kann, bzw. verschoben wird.

Zur Ausrichtung des Bauteils 2 mittels der Anschlaganordnung 9 kann dieser bezüglich dem Bauteil 2 gegenüberliegend ein Anschlag vorgesehen sein, bzw. eine starre Referenz 19. So kann beispielsweise vorgesehen sein, dass mittels der verstellbaren Anschlaganordnung 9 das Bauteil 2 verschiebbar ist, sodass es an der starren Referenz 19 für den Wendevorgang zur Anlage kommt und somit zwischen der Referenz 19 und der Anschlaganordnung 9 bzw. der Anschlagebene 10 unverschiebbar aufgenommen ist.

Die Anschlaganordnung 9 ist derart ausgebildet, dass sie das Bauteil 2 bei einem Transport entlang der Förderrichtung F in die Fördereinheit 4 bzw. aus dieser heraus nicht behindert. Bevorzugt erstreckt sie sich über eine Gesamtlänge 18 der Fördereinheit 4 und kann aus einem Aufnahmebereich der Fördereinheit 4 verfahren werden.

Die Verstellung der Anschlaganordnung 9 kann mittels eines nicht dargestellten Antriebsmittel erfolgen, welches bevorzugt in der Rotationseinheit 3 aufgenommen ist. Wie dargestellt kann die Anschlaganordnung 9 mittels einer Schienenführung oder dergleichen gelagert und führbar sein, welche außerhalb der beiden Förderebenen und abgewandt von diesen bezüglich dem Bauteil angeordnet ist.

Zur Drehung der Rotationseinheit 3 bezüglich der Rotationsachse R kann ebenfalls eine nicht dargestellte Antriebsvorrichtung vorgesehen, welche z.B. mit einem Riemen- oder einen Zahnradantrieb gekoppelt ist. Die dargestellten ringförmigen Elemente der Rotationseinheit können bevorzugt drehbar gelagert sein und mit der Fördereinheit um die Achse R drehbar sein, oder lediglich einzelne Segmente aufweisen welche drehbar gelagert sind und mit der Fördereinheit gekoppelt sind.

Ferner kann bevorzugt eine Steuerungsvorrichtung 30 vorgesehen sein, welche mit der Rotationseinheit 3 und der Fördereinheit 4 sowie der Anschlaganordnung 9 verbunden ist, sodass deren Bewegungen, bevorzugt abhängig voneinander, von der Steuerungseinheit veranlasst werden.

Ferner kann die Vorrichtung zur Detektion eines aufgenommenen oder ausgegebenen Bauteils in den Endbereichen 21, 22 Lichtschranken aufweisen, wie angedeutet, welche bevorzugt mit der Steuerungsvorrichtung 30 verbunden sind. Die Lichtschranken können zur Freigabe der Anschlaganordnung 9 oder auch z.B. zur Unterstützung von beweglichen Fördermitteln vorgesehen sein, sodass dessen Betrieb durch die Lichtschranken bezüglich Bauteilpositionen, etc. unterstützt wird.

Wie in Fig, 1 ebenfalls dargestellt, können die Fördermittel einzelne Förderelemente aufweisen, welche z.B. als drehbar gelagerte Rollen ausgebildet sind. Ebenso können aber auch Förderbänder, Gleitflächen, bzw. planare Flächen mit gelagerten Rollkörpern, wie. z.B. Kugeln vorgesehen sein. Dabei sei darauf hingewiesen, dass die Anschlaganordnung nicht auf die gezeigt Ausführung der Fördermittel eingeschränkt ist.

Ferner kann die Fördereinheit 4, unabhängig von der Ausgestaltung der Fördermittel, eine seitliche Zugangsöffnung 28 aufweisen, welche zum Bestücken der Vorrichtung mit einem Bauteils 2 quer zur Förderrichtung F vorgesehen ist. So kann beispielsweise mittels der Zugangsöffnung 28 ein manuelles Einlegen von Bauteilen ermöglicht werden, ohne dabei benachbarte Anlagen der Vorrichtung 1 zu betreten. Die Zugangsöffnung 28 ist bevorzugt der Anschlaganordnung bezüglich der Rotationsachse R gegenüberliegend angeordnet. Weiters kann auch vorgesehen sein, dass über die Zugangsöffnung 28 Bauteile mittels der verstellbaren Anschlaganordnung 9 ausgeben werden können.

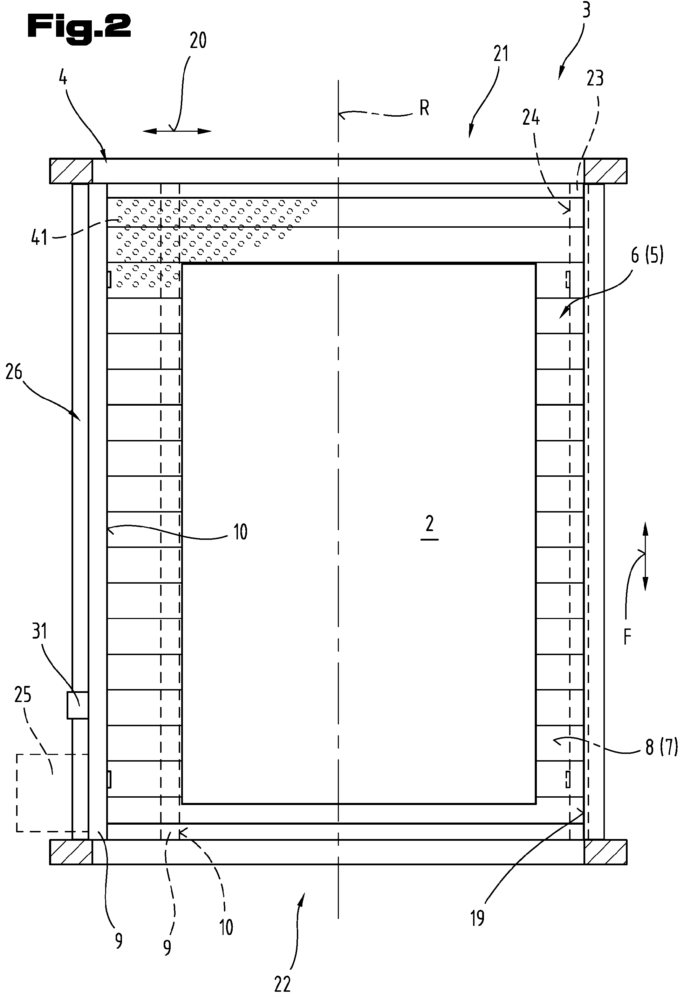

In Fig. 2 ist eine Draufsicht auf eine Rotationseinheit 3 dargestellt, wobei das erste Fördermittel der Fördereinheit 4 ausgeblendet ist.

Das Bauteil 2 ist in der Fördereinheit 4 aufgenommen und befinden sich zwischen den beiden Fördermitteln bzw. den beiden Förderebenen. Die Anschlaganordnung 9 befindet sich in der Warteposition 26 und kann zum Bauteil 2 in einer Richtung senkrecht zu der Rotationsachse R verstellt werden, und mit der Anschlagebene 10 an einer Längskante des Bauteils 2 anzuliegen, wie strichliert angedeutet ist.

Zur Feststellung der Anschlaganordnung 9 in ihrer Warteposition 26 kann ein Detektor 31 vorgesehen sein, welcher bevorzugt mit der Steuerungsvorrichtung verbunden ist.

Unabhängig von der Ausführung kann die Anschlaganordnung 9 zudem einen Drucksensor oder dergleichen aufweisen, mittels dessen ein Anschlag des in der Fördereinheit 4 befindlichen Bauteils bei Verstellen der Anschlaganordnung bestimmt werden kann, bzw. auch ein Anliegen dies Bauteils im Wendevorgang. Bevorzugt können zwei beabstandete Sensoren vorgesehen sein, sodass eine lineare Anlage des Bauteils detektiert werden kann.

Bezüglich dem Bauteil gegenüberliegend kann eine starre Anlage bzw. Referenz 19 vorgesehen sein, z.B. zur Ausrichtung des Bauteils, indem dies an die Referenz mittels der Anschlaganordnung herangeführt wird.

Weiters kann der Anschlaganordnung 9 bezüglich der Rotationsachse R gegenüberliegend eine zweite Anschlaganordnung 23 mit einer zweiten Anschlagebene 24 angeordnet sein, sodass ein Bauteil zwischen den beiden Anschlaganordnungen aufgenommen ist. Die zweite Anschlaganordnung kann ebenfalls senkrecht zur Rotationsachse R verstellbar sein und wäre somit im Wesentlichen symmetrisch zur ersten Anschlaganordnung ausgebildet. In einer Weiterbildung kann vorgesehen sein, dass die beiden Anschlaganordnungen synchron zueinander verstellbar sind. Bei einer derartigen Anordnung kann vorgesehen sein, dass das Bauteil mittels der zwei Anschlaganordnungen in der Fördereinheit 4 zentriert werden kann.

Zumindest eines der Fördermittel kann bezüglich der Förderrichtung F verfahrbar ausgebildet sein, und ein Antriebsmittel 25 aufweisen. Beispielseise kann das Fördermittel auch ein Förderband umfassen.

Weiters sind in Fig. 2 bürstenartigen Elemente 41 zur Aufnahme des Bauteil angedeutet, auf welche später genauer eingegangen wird.

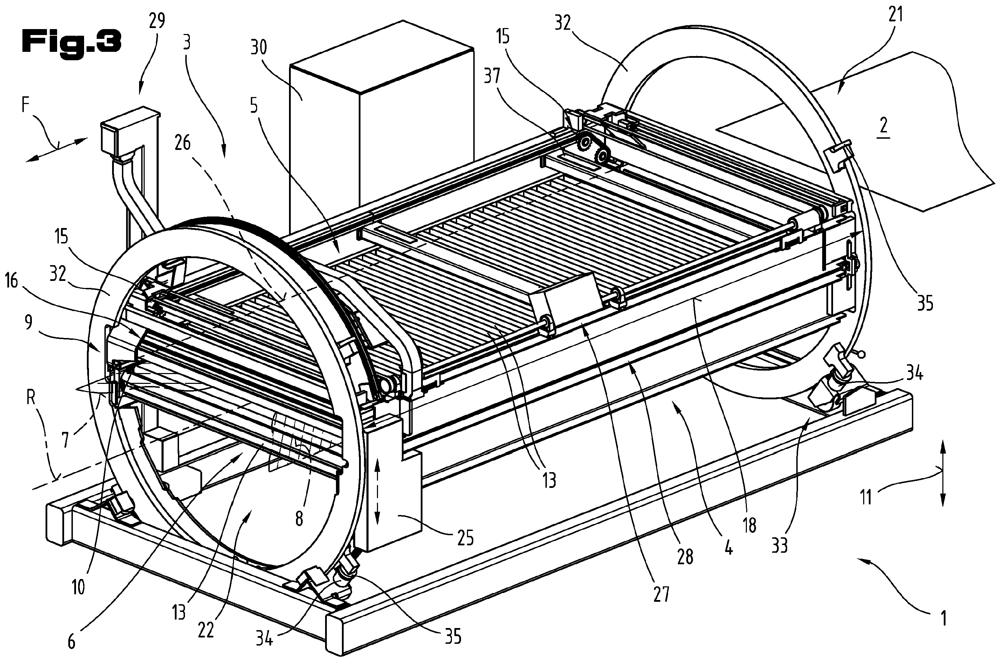

In Fig. 3 ist eine bevorzuge Ausführungsform der Fördereinheit 4 dargestellt, bei der zumindest eines der Fördermittel, umfassend das erste Fördermittel 5 und zweite Fördermittel 6, einzelne Förderelemente 13 umfasst; wobei die Förderelemente 13 stabförmig ausgebildet sind und quer zur Förderrichtung F angeordnet sind. Ferner ist zumindest eines der beiden Fördermittel 5,6, bezüglich der Förderrichtung F relativ verfahrbar ausgebildet. Die Förderrichtung F ist bevorzugt parallel zu der Rotationsachse R.

Das Fördermittel weist bevorzugt einen Zugmitteltrieb 17 auf, z.B. einen endlos umlaufenden Riemen, mittels welchen Zugmittel die stabförmigen Fördermittel miteinander gekoppelt sind, sodass diese entlang der Förderrichtung F verfahrbar sind.

Ferner kann zumindest eine Umlenkanordnung 15 vorgesehen sein, wobei mittels der Umlenkanordnung 15 das zumindest eine verfahrbare Fördermittel derart umlenkbar ist, dass es vom jeweils anderen, gegenüberliegenden Fördermittel distanzierbar ist, sodass zumindest ein Teilabschnitt 16 des verfahrbaren Fördermittels außerhalb der jeweiligen Förderebene verlagerbar ist. Bei Verwendung eines Zugmitteltriebs 17 können die stabförmigen Förderelemente 13 entlang der Förderrichtung F verfahren werden, bis diese die Umlenkanordnung 15 erreichen und mittels der Umlenkanordnung 15 von gegenüberliegenden Fördermittel distanziert werden. Mittels der Umlenkanordnung 15 können diese beispielsweise entgegen der ursprünglichen Förderrichtung zurückgeführt werden.

Besonders bevorzugt kann dabei vorgesehen sein, dass die stabförmigen Förderelemente 13 einen polygonalen, insbesondere rechteckigen Querschnitt aufweisen. Vorteilhaft bei dieser Querschnittsform ist die quer verlaufende Kante, welche durch den Querschnitt gebildet wird und einen Einzug des Bauteils sowie dessen Ausschub aus der Vorrichtung besonders begünstigt.

Das Bauteil 2 kann, wie dargestellt, bezüglich der Förderrichtung F im vorderen Endbereich 21 der Fördereinheit 4 zugeführt werden, bzw. von dem verfahrbaren Fördermittel eingezogen werden und im hinteren Endbereich 22 wieder an eine nachgeordnete Anlage ausgegeben. Weiters kann mittels des verfahrbaren Fördermittels das Bauteil 2 auch im selben Endbereich eingezogen und wieder ausgegeben werden.

Bezüglich des Verfahrens des Fördermittels weist die Fördereinheit 4 bevorzugt ein Antriebsmittel 25 auf, welche ebenfalls mit der Fördereinheit 4 mit gedreht werden kann. Diesbezüglich können Versorgungsleitungen 29 zum Antriebsmittel 25 geführt sein, wie dargestellt, welche flexibel ausgebildet sind, sodass diese bei der Drehung nicht beschädigt werden. Zur Vollständigkeit sei herbei erwähnt, dass bevorzugt sämtlich Anlagenteile, welche mit der Rotationseinheit 3 drehbar sind und eine externe Energieversorgung oder auch eine Datenübertragung oder dergleichen benötigen, über eine derartige Versorgungsleitung 29 verbunden sind. Die Versorgungsleitungen 29 sind bevorzugt mit einer Steuerungsvorrichtung 30, welche zur Steuerung der gesamten Vorrichtung 1 vorgesehen ist.

Wie ebenfalls dargestellt kann die Rotationseinheit 3 zumindest zwei konzentrisch zur Rotationsachse R angeordnete ringförmige Elemente 36 umfassen, wobei die Fördereinheit 4 zwischen den zwei ringförmigen Elementen 36 aufgenommen ist. Die ringförmigen Elemente 36 können bevorzugt starr mit der Fördereinheit 4 verbunden und rotierbar sein, wobei die ringförmigen Elemente 36 drehbar in einer Lageranordnung 33 aufgenommen sind. Zur Drehung der Rotationseinheit ist bevorzugt eine Antriebseinheit vorgesehen, welche an einem starren Teil der Vorrichtung 1 befestigt ist. Weiters kann mit der Antriebseinheit wirkverbunden eine Verzahnung an den ringförmigen Elementen vorgesehen sein, oder auch ein Riemen, eine Kette oder dergleichen.

Weiters weist die Vorrichtung 1 bzw. die Fördereinheit 4 erfindungsgemäß eine verstellbare Anschlaganordnung 9 zur Anlage des Bauteils 2 im Wendevorgang auf, wobei die Anschlaganordnung 9 parallel bezüglich der ersten Förderebene 7 und quer zur Rotationsachse R verstellbar ist. Mittels der Anschlaganordnung 9 in eine Anschlagebene 10 zwischen dem ersten und zweiten Fördermittel bzw. zwischen dessen Förderebene ausgebildet, welche Anschlagebene bevorzugt senkrecht zu diesen ist und/oder parallel zur Rotationsachse R. Die Anschlaganordnung 9 kann dabei bevorzugt über eine Gesamtlänge 18 der Fördereinheit 4 bzw. der Fördermittel angeordnet sein.

Die Anschlaganordnung kann in einer Ausführung zumindest in den Endbereichen 21, 22 gelagert sein, sodass diese unabhängig von der Bewegung des zumindest einen verfahrbaren Fördermittels verstellt werden kann. Die Anschlaganordnung 9 befindet sich in der Darstellung in einer Warteposition 26. Zur Verstellung der Anschlaganordnung 9 kann bevorzugt eine Antriebsanordnung 27 vorgesehen sein, mittels welchen die Anschlaganordnung 9 bevorzugt linear verschiebbar ist, wie im dargestellten Beispiel quer zur Rotationsachse R. Wie weiters dargestellt, kann die Antriebsanordnung 27 ebenfalls eine Art Zugmittel umfassen, sowie weitere, aus dem Stand der Technik bekannte Vorrichtungen, welche zum Verstellen der Anschlaganordnung geeignet sind.

Bezüglich der Rotation können bevorzugt Begrenzungselemente 34 vorgesehen werden, welche z.B. als Anschlag für eine vollständige durchgeführte Drehung dienen. Komplementär dazu können an drehbaren Bereichen, insbesondere den ringförmigen Elementen 32, zur Begrenzung dienende Stopper 35 vorgesehen sein.

Wie eingangs erwähnt kann die Vorrichtung aber auch bezüglich einem größeren Winkel drehbar sein, z.B. 360 °.

Weiters kann vorgesehen sein, dass beide Fördermittel verfahrbar ausgebildet sind, insbesondere synchron zueinander, sodass das Bauteil von beiden Fördermitteln aufgenommen wird und entlang der Förderrichtung F bewegbar ist.

Die Fördereinheit 4 kann in einer Weiterbildung eine Anordnung zur Höhenverstellung von zumindest einem der Fördermittel aufweisen, sodass ein Abstand zwischen den beiden Fördermitteln einstellbar ist. Bevorzugt sind die Antriebsmittel 25 dazu ausgebildet, sowie zum Antreiben des Zugmittelts mittels der dargestellten Räder.

Die Vorrichtung 1 kann zudem Positionsmittel 37 zur Feststellung einer Lage bzw. erfolgten Rotation der Rotationseinheit 3 umfassen. Die Mittel können beispielsweise einen Neigungssensor umfassen.

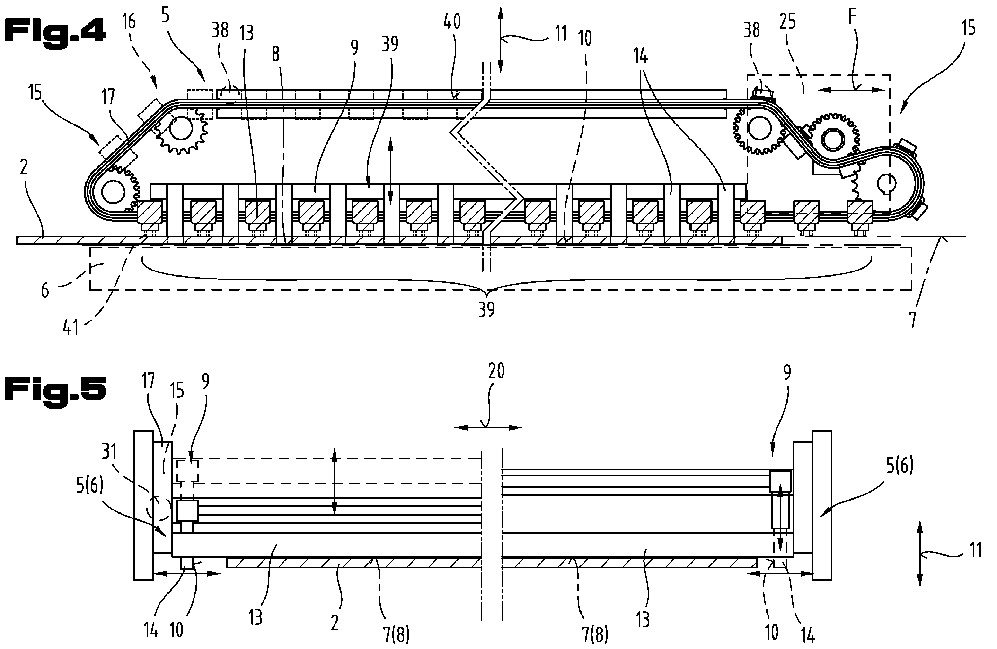

In Fig. 4 ist eine Ausführung eines verfahrbaren Fördermittels 5 nach Fig. 3 in Seitenansicht dargestellt. Bevorzugt weist das Fördermittel einen Zugmitteltrieb 17, insbesondere einen umlaufenden Riemen oder Kette auf, mittels welchen eine Verstellung des Fördermittels 5 entlang der Förderrichtung F erfolgen kann. Zudem kann der Zugmitteltrieb endlos umlaufend oder aber auch unterbrochen ausgebildet sein und zwischen zwei Endstellungen verfahrbar.

Die stabförmigen Förderelemente 13 sind quer zur Rotationsachse R (bevorzugt quer zur Förderrichtung F) angeordnet. Zudem können die stabförmigen Förderelemente 13 bevorzugt starr an dem Zugmitteltrieb 17 befestigt sein und mit diesem umlaufend ausgebildet. Bei dieser Ausführungsform kann jeweils ein Zugmittel in den seitlichen Randbereichen der Fördereinheit angeordnet sein und die stabförmigen Förderelemente 13 zwischen zwei Zugmitteln befestigt, sodass sich diese über die Breite quer zur Förderrichtung F der Fördereinheit erstrecken. Alternativ kann auch eine Schubkette oder andere umlaufende Fördervorrichtungen vorgesehen sein.

Die Förderelemente 13 des Fördermittels 5 können derart ausgebildet sein, dass sie mittels des Zugmittels endlos umlaufend sind. Es kann aber auch sein, dass diese zur Beförderung eines Bauteils entlang der Förderrichtung F bezüglich der Umlaufrichtung der Förderelemente Endanschläge oder dergleichen aufweisen, sodass sich diese lediglich in einem Bestimmten Bereich (bezüglich ihrer Umlaufrichtung) bewegen. Zur Feststellung der Position oder auch einer Endposition können Bestimmungsmittel 38 vorgesehen sein. Die Bestimmungsmittel können Detektoren, Magnetsensoren, mechanische Schalter etc. umfassen. Weiters können diese wiederum mit der Steuerungsvorrichtung verbunden sein. So kann beispielsweise vorgesehen sein, dass sich die Förderelemente in einer Warteposition für ein aufzunehmendes Bauteil befinden, und somit ein überwiegender Anteil oder alle Förderelemente aus der Förderebene verbracht sind und bei Aufnahme eines Bauteils erst mit diesem in die Förderebene verfahren werden.

Das zweite Fördermittel 6 ist in Fig. 4 strichliert angedeutet und kann in einer Ausführungsform auch nicht verfahrbar ausgebildet sein und z.B. drehbar gelagerte Rollen oder dergleichen zur Anlage des Bauteils aufweisen. An diesen Punkt sei erwähnt, dass bei der Verwendung von einem verfahrbaren Fördermittel sowie auch einen nicht verfahrbaren Fördermittel die Anordnung der gezeigten Fördermittel auch umgekehrt sein kann, sodass das verfahrbare Fördermittel unten ist, etc. Bevorzugt kann das zweite Fördermittel symmetrisch zum ersten ausgebildet sein.

Besonders bevorzugt weist das verfahrbare Fördermittel, bzw. die stabförmigen Förderelemente 13 unabhängig von der gezeigten Ausführung bürstenartige Elemente 41 auf, wobei die bürstenartigen Elemente zur Aufnahme des Bauteils 2 vorgesehen sind. Die bürstenartigen Elemente 41 sind an der dem Bauteil 2 zugewandten Oberfläche des Fördermittels 5 angeordnet.

Die bürstenartigen Elemente 41 sind bevorzugt elastisch verformbar und können aus einem elastischen Material wie Elastomere oder auch Thermoplaste gefertigt sein oder aber auch aus anderen Kunststoffen und weiteren Materialien bestehen. Bevorzugt weisen sie eine höhere Haftreibung gegenüber dem Bauteil auf, sodass diese das Bauteil 2 in der Bewegung des Fördermittels bezüglich der Förderrichtung F aufgreifen und mitnehmen können. Alternativ kann anstelle der bürstenartigen Elemente eine Beschichtung oder dergleichen mit einem erhöhten Reibungskoeffizienten an der Oberfläche des Fördermittels vorgesehen sein.

So kann beispielsweise das Bauteil in dem ausgebildeten Spalt im Umlenkbereich der Umlenkanordnung 15 mittels der bürstenartigen Elemente 41 eingezogen, bzw. auch in diesem Bereich an eine benachbarte Anlage wieder ausgegeben werden. Bei einer zuvor erwähnten Ausgestaltung von zwei zueinander synchron verfahrbaren Fördermitteln kann das zweite Fördermittel 6 symmetrisch zu dem ersten Fördermittel 5 ausgebildet sein.

Bezüglich der zuvor erwähnten Höhenverstellung des Fördermittels kann auch vorgesehen sein, dass z.B. die Antriebsräder des Zugmitteltriebes einstellbar sind, sodass der Abstand des Fördermittels zum gegenüberliegenden Fördermittel veränderbar ist.

Weiters ist in Fig. 4 eine ursprüngliche Position der stabförmigen Förderelemente 13 strichliert angedeutet, in welcher Position sich die Förderelemente vor dem Aufnehmen des Bauteils 2 befanden, bzw. sich nach dem Ausgeben eines Bauteils befinden können, sodass zumindest ein Teilabschnitt 16 des verfahrbaren Fördermittels außerhalb der jeweiligen Förderebene verlagerbar ist. Diesbezüglich kann vorgesehen sein, dass die stabförmigen Förderelemente 13 bezüglich einer Länge 40 des Zugmittels 17 nur innerhalb eines Zugmittelabschnittes 39 angeordnet sind, wobei der Zugmittelabschnitt 39 30% bis 60 % der Länge 40 beträgt. Die Länge 40 beträgt bei einem umlaufenden Zugmitteltrieb bzw. Riemen dessen Gesamtlänge.

Die Anschlaganordnung kann einzelne Anschlagelemente 14 umfassen, wobei die Anschlagelemente 14 bevorzugt senkrecht zur ersten Förderebene 7 angeordnet sind und bezüglich einer Richtung parallel zu der Rotationsachse (R), bzw. in Förderrichtung F, beabstandet zueinander angeordnet sind. Die Anschlagelemente 14 bilden miteinander die Anschlagebene 10 bzw. Anschlagfläche.

Weiters ist vorgesehen, dass die Anschlagelemente 14 jeweils zwischen den stabförmigen Förderelementen 13 des ersten Fördermittels 5 hindurchführbar sind, bevorzugt zumindest bis zur Förderebene 8 des gegenüberliegenden zweiten Fördermittels 6.

Allgemein sei hierzu bezüglich eines "Hindurchführens" erwähnt, dass die stabförmigen Förderelemente (ob Rollen oder bewegliche Stäbe) dementsprechende Zwischenräume aufweisen welcher einer Beabstandung der (parallelen) stabförmigen Förderelemente zueinander entspricht, durch welche die Anschlagelemente hindurchführbar sind, welche Zwischenräume allgemein aus den Figuren ersichtlich sind.

Vor allem bei (in Förderrichtung) verfahrbaren Förderelementen sei zur Vollständigkeit erwähnt, dass die Anschlagelemente 14 bezüglich einem Hindurchführen vorzugsweise auch zur Gänze aus dem Bereich der Förderelemente wieder herausführbar sind, sodass diese die Förderelemente in Förderrichtung nicht blockieren, wie aus den Figuren 4 bis 7 hervorgeht.

Die Anschlagelemente 14 der Anschlaganordnung 9 können zudem in Förderrichtung F bezüglich einem Spiel gleitend gelagert sein, sodass das verfahrbare Fördermittel mit den stabförmigen Förderelementen 13 nicht in eine exakte Position bezüglich der Anschlagelemente 14 verbracht werden muss, sondern diese mittels des Spiels zwischen die Förderelemente 13 hindurch geführt werden kann. Diesbezüglich können hierfür an den Anschlagelementen Abschrägungen, Rundungen etc. vorgesehen sein.

Bei Verwendung eines umlaufenden Zugmitteltriebes 17 kann die Länge der Anschlaganordnung 9 aufgrund der Umlenkanordnung 15 kürzer als eine Gesamtlänge der Fördereinheit gewählt werden. Die Anschlaganordnung 9 kann sich beispielsweise zwischen zwei Umlenkanordnungen 15 eines umlaufenden Zugmitteltriebes 17 erstrecken, jedoch mindestens bezüglich der Förderrichtung F über eine Breite von zwei benachbarten stabförmigen Förderelementen 13, bzw. über zumindest zwei Öffnungen zwischen den stabförmigen Förderelementen.

Die stabförmigen Förderelemente 13 weisen bevorzugt einen polygonalen, insbesondere einen rechteckigen Querschnitt auf, wie ebenfalls dargestellt
In Fig.5 ist eine mögliche Ausführung einer Anschlaganordnung dargestellt, wobei die Anschlaganordnung 9 relativ bezüglich einer senkrechten Richtung 11 zur ersten Förderebene 7 verstellbar ist. Zudem kann die Verstellung der Anschlaganordnung 9 bezüglich der senkrechten Richtung 11 mittels einer Kulissenanordnung erfolgen, worauf später genauer eingegangen wird.

Ferner kann die Anschlaganordnung 9 einzelne Anschlagelemente 14 wie in Fig. 4 aufweisen, wobei die Anschlagelemente 14 bezüglich der Förderrichtung F zwischen den stabförmigen Förderelementen 13 des Fördermittels angeordnet (und hindurchführbar) sind. So kann die Anschlaganordnung 9 entlang der senkrechten Richtung 11 bevorzugt außerhalb der Förderebene verstellt werden, sodass diese außerhalb des Bereiches zwischen den beiden Förderebenen verlagerbar ist.

Wie in Fig. 5 rechts dargestellt ist, kann die Verstellung der Anschlaganordnung 9 bezüglich der senkrechten Richtung 11 auch über eine Teleskopanordnung erfolgen. Beispielsweise können die einzelnen Anschlagelemente teleskopierbar ausgebildet sein und z.B. über einen gemeinsamen Antrieb verstellbar.

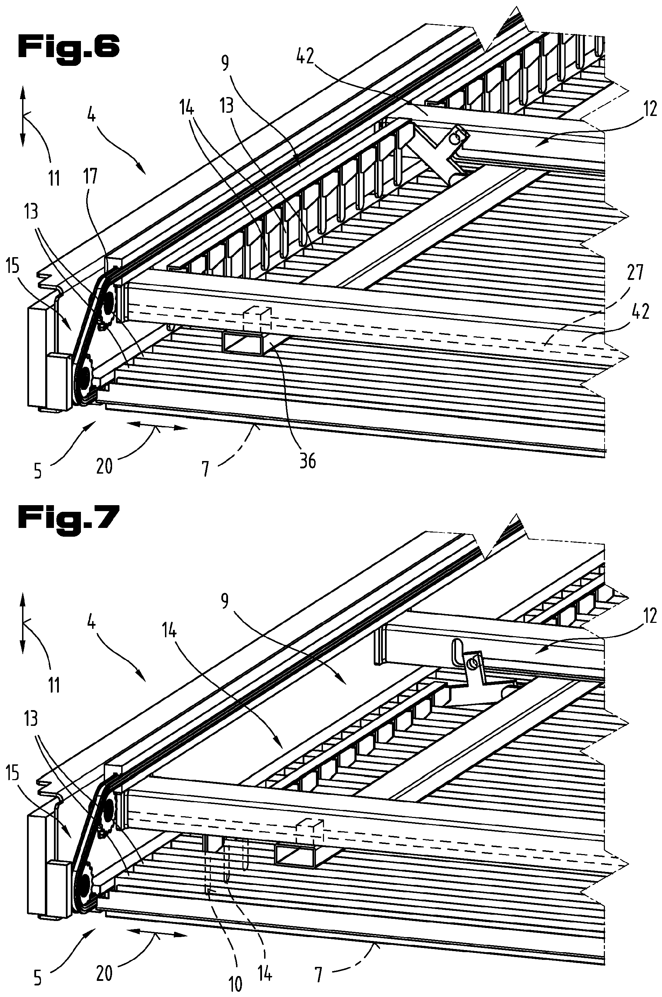

In Fig. 6 und 7 ist eine Ausführungsform einer Fördereinheit 4 dargestellt, wobei die Fördereinheit 4 eine Kulissenanordnung 12 umfasst, wobei die Anschlaganordnung 9 mit der Kulissenanordnung 12 derart gekoppelt ist, dass bei der Verstellung der Anschlaganordnung 9 zur Rotationsachse (R) die Anschlaganordnung mittels der Kulissenanordnung 12 bezüglich der senkrechten Richtung 11 verstellbar ist. In Fig. 6 befindet sich die Anschlaganordnung mit den Anschlagelementen in einer Stellung außerhalb des Aufnahmebereichs zwischen den beiden Förderebenen. Wie dargestellt, kann die Verstellung bezüglich der senkrechten Richtung 11 über die Kulisse bevorzugt unmittelbar zu Beginn der Verstellung der Anschlaganordnung zur Rotationsachse erfolgen, wenn diese aus der Warteposition verfahren wird und von der Rotationsachse am weitesten distanziert ist. Danach wird die Anschlaganordnung in den Aufnahmebereich verbracht, wie in Fig. 7 dargestellt ist.

Die Kulissenanordnung 12 ist dabei bevorzugt an einer Verstrebung 42 oder dergleichen angeordnet, welche in der Fördereinheit 4 angeordnet ist. Wie dargestellt, ist die Kulisse bevorzugt in einer Ebene senkrecht zur Rotationsachse angeordnet bzw. ausgebildet. Die Antriebsmittel zur Verstellung der Anschlaganordnung 9 bzw. eines Führungselementes 36 der Anschlaganordnung können wie in den vorangegangenen Figuren ausgebildet sein, weiters können die Antriebsmittel 25 ebenfalls bevorzugt an bzw. in den Verstrebungen 42 angebracht sein.

Weiters ist vorgesehen, dass die Anschlagelemente 14 jeweils zwischen den stabförmigen Förderelementen 13 hindurchführbar sind, wie dargestellt, mittels der Kulissenanordnung 12.

Die Anschlaganordnung 9 kann diesbezüglich einen Hebel mit einem Mitnehmer aufweisen, wobei der Mitnehmer in einer Kulissenbahn aufgenommen ist, und mittels dieser zwangsgeführt ist. Mittels der Verstellung bezüglich der senkrechten Richtung 11 ist die Anschlaganordnung 9 in einem Aufnahmebereich für das Bauteil 2 zwischen der ersten und zweiten Förderebene hinein und heraus verstellbar, indem der Mitnehmer bezüglich der Kulissenanordnung 12 in eine Endposition verbracht wird und somit die Verstellung bezüglich der senkrechten Richtung 11 veranlasst.

Bevorzugt ist bezüglich allen Ausführungen die Steuerungsvorrichtung dazu eingerichtet, die Verstellung der Anschlaganordnung abhängig vom Verfahren der Fördermittel zu steuern, sodass z.B. bei der Ausführung gemäß Fig. 6 und 7 die stabförmigen Förderelemente 13 in Position für ein Hindurchführen der Anschlagelemente 14 gebracht werden. Wie zuvor erwähnt kann die Anschlaganordnung zudem auch ein Spiel parallel zur Rotationsachse aufweisen, sodass die Anschlagelemente 14 leichter durch die Förderelemente hindurchführbar sind.

Dabei sei zur Vollständigkeit erwähnt, dass zwar nur ein Hebel mit einer Kulissenbahn dargestellt ist, wobei bezüglich einer Verstellung und Lagerung der Anschlaganordnung, bzw. insbesondere der Anschlagelemente 14 bevorzugt an jeder der Verstrebungen 42 und jeweils den Anschlagelementen 14 zugewandt eine derartige Kulissenführung ausgebildet sein kann, wobei die jeweiligen Hebel der Kulissenanordnung sich miteinander synchron bezüglich der Verstellung der Anschlaganordnung bewegen.

Der dargestellte Mitnehmer kann bevorzugt entlang seiner Kulissenbahn derart zwangsgeführt sein, sodass dieser mittels der Verstellung der Anschlaganordnung quer zur Rotationsachse hin und zurück einer einzig möglichen Bahnbewegung in der Kulisse folgt. Durch diese Maßnahme ist einer jeden Position der Anschlaganordnung quer zur Rotationsachse eine eindeutige Position senkrecht zur Förderebene zugewiesen, wodurch weiters auch eine Bestimmung der Lage des Bauteils detektierbar ist.

Die Anschlagelemente 14 können bevorzugt bezüglich der senkrechten Richtung 11 derart dimensioniert sein, dass sie sich bezüglich ihrer Länge nach dem Verstellen in Richtung der Förderebene 7 zwischen den beiden Fördermitteln befinden, und sich maximal bis zu dieser Förderebene des gegenüberliegenden Fördermittels erstrecken, sodass sie die Förderelemente des gegenüberliegenden Fördermittels nicht berühren.

Wie dargestellt erstreckt sich die Anschlaganordnung 9 bezüglich einer Richtung parallel zu der Rotationsachse R über zumindest zwei stabförmige Förderelemente 13, bevorzugt zwischen 25% und 80% einer Gesamtlänge der Fördereinheit, bzw. eines der Fördermittels.

In den Figuren 4 bis 7 sind weitere und gegebenenfalls für sich eigenständige Ausführungsform der Vorrichtung gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren hingewiesen bzw. Bezug genommen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Vorrichtung | 31 | Detektor |
| 2 | Bauteil | 32 | ringförmige Elemente |
| 3 | Rotationseinheit | 33 | Lageranordnung |
| 4 | Fördereinheit | 34 | Begrenzungselemente |
| 5 | erstes Fördermittel | 35 | Stopper |
| 6 | zweites Fördermittel | 36 | Führungselement |
| 7 | erste Förderebene | 37 | Positionsmittel |
| 8 | zweite Förderebene | 38 | Bestimmungsmittel |
| 9 | Anschlaganordnung | 39 | Zugmittelabschnitt |
| 10 | erste Anschlagebene | 40 | Länge |
| 11 | senkrechten Richtung | 41 | bürstenartige Elemente |
| 12 | Kulissenanordnung | 42 | Verstrebung |
| 13 | Förderelemente | R | Rotationsachse |
| 14 | Anschlagelemente | F | Förderrichtung |
| 15 | Umlenkanordnung | | |
| 16 | Teilabschnitt | | |
| 17 | Zugmitteltrieb | | |
| 18 | Gesamtlänge | | |
| 19 | Referenz | | |
| 20 | Bewegungsrichtung | | |
| 21 | vorderer Endbereich | | |
| 22 | hinteren Endbereich | | |
| 23 | zweite Anschlaganordnung | | |
| 24 | zweite Anschlagebene | | |
| 25 | Antriebsmittel | | |
| 26 | Warteposition | | |
| 27 | Antriebsanordnung | | |
| 28 | Zugangsöffnung | | |
| 29 | Versorgungsleitungen | | |
| 30 | Steuerungsvorrichtung | | |

## Patentansprüche

1. Vorrichtung (1) zum Wenden von plattenförmigen Bauteilen (2), insbesondere von Blechen, umfassend;
- eine Rotationseinheit (3); wobei die Rotationseinheit (3) dazu ausgebildet ist, das Bauteil (2) bezüglich einer Rotationsachse (R) in einem Wendevorgang zu wenden;
- eine Fördereinheit (4), wobei die Fördereinheit (4) in der Rotationseinheit (3) aufgenommen ist und mittels der Rotationseinheit (3) bezüglich der Rotationsachse (R) rotierbar ist, und wobei die Fördereinheit (4) zumindest ein erstes Fördermittel (5) und zumindest ein gegenüberliegend angeordnetes zweites Fördermittel (6) umfasst, und
wobei mittels des ersten Fördermittels (5) eine erste Förderebene (7) definiert ist und mittels des zweiten Fördermittels (6) eine parallel zur ersten Förderebene (7) angeordnete zweite Förderebene (8) definiert ist, und;
wobei die Fördereinheit (4) dazu ausgebildet ist, das Bauteil (2) zwischen der ersten und zweiten Förderebene (7,8) aufzunehmen, sodass das Bauteil (2) zwischen dem ersten und zweiten Fördermittel (5,6) für den Wendevorgang aufgenommen ist; wobei die Fördereinheit (4) zumindest eine erste Anschlaganordnung (9) zur Anlage des Bauteils (2) im Wendevorgang umfasst und mittels der Anschlaganordnung (9) eine erste Anschlagebene (10) zwischen dem ersten und zweiten Fördermittel (5,6) ausbildbar ist, wobei die Anschlaganordnung (9) parallel bezüglich der ersten Förderebene (7) und quer zur Rotationsachse (R) verstellbar ist, sowie bezüglich einer zur ersten Förderebene (7) senkrechten Richtung (11) verstellbar ist,
**dadurch gekennzeichnet dass** die Fördereinheit (4) eine Kulissenanordnung (12) umfasst, wobei die Anschlaganordnung (9) mit der Kulissenanordnung (12) derart gekoppelt ist, dass bei der Verstellung der Anschlaganordnung (9) - parallel bezüglich der ersten Förderebene (7) und quer - in Richtung zur Rotationsachse (R), die Anschlaganordnung mittels der Kulissenanordnung (12) bezüglich der senkrechten Richtung (11) verstellbar ist.

2. Vorrichtung (1) nach Anspruch 1, **dadurch gekennzeichnet, dass** zumindest eines der Fördermittel (5,6) einzelne stabförmige Förderelemente (13) umfasst; wobei die stabförmigen Förderelemente (13) quer zur Rotationsachse (R) angeordnet sind.

3. Vorrichtung (1) nach Anspruch 1 oder 2, **dadurch gekennzeichnet, dass** die Anschlaganordnung (9) einzelne Anschlagelemente (14) umfasst, wobei die Anschlagelemente (14) senkrecht zur ersten Förderebene (7) angeordnet sind und bezüglich einer Richtung parallel zu der Rotationsachse (R) beabstandet zueinander angeordnet sind.

4. Vorrichtung nach Anspruch 2 und 3, **dadurch gekennzeichnet, dass** die einzelnen Anschlagelemente (14) jeweils zwischen den stabförmigen Förderelementen (13) hindurchführbar sind.

5. Vorrichtung (1) nach einem der Ansprüche 1 bis 4, **dadurch gekennzeichnet, dass** zumindest eines der beiden Fördermittel, umfassend das erste und zweite Fördermittel (5,6), relativ bezüglich seiner Förderebene entlang einer Förderrichtung (F) in der Fördereinheit verfahrbar ausgebildet ist, sodass das Bauteil (2) zusammen mit dem verfahrbaren Fördermittel bewegbar ist.

6. Vorrichtung (1) nach Anspruch 5, **dadurch gekennzeichnet, dass** die Fördereinheit (4) zumindest eine Umlenkanordnung (15) aufweist, wobei mittels der Umlenkanordnung (15) das zumindest eine verfahrbare Fördermittel derart umlenkbar ist, dass es vom jeweils anderen, gegenüberliegenden Fördermittel distanzierbar ist.

7. Vorrichtung (1) nach Anspruch 5 oder 6, **dadurch gekennzeichnet, dass** das zumindest eine verfahrbare Fördermittel mittels eines Zugmitteltriebes (17) verfahrbar ausgebildet ist.

8. Vorrichtung (1) nach einem der Ansprüche 5 bis 7, **dadurch gekennzeichnet, dass** das verfahrbare Fördermittel bürstenartige Elemente (41) aufweist, wobei die bürstenartigen Elemente zur Aufnahme des Bauteils (2) vorgesehen sind.

9. Vorrichtung (1) nach einem der Ansprüche 1 bis 8, **dadurch gekennzeichnet, dass** die Anschlaganordnung (9) bezüglich einer Richtung parallel zu der Rotationsachse (R) über eine Gesamtlänge (18) der Fördereinheit (4) angeordnet ist.

10. Vorrichtung (1) nach einem der Ansprüche 2 bis 8, **dadurch gekennzeichnet, dass** sich die Anschlaganordnung (9) bezüglich einer Richtung parallel zu der Rotationsachse (R) über zumindest zwei stabförmige Förderelemente (13) erstreckt.

11. Vorrichtung (1) nach einem der Ansprüche 1 bis 10, **dadurch gekennzeichnet, dass** die Fördereinheit (4) eine zweite Anschlaganordnung (23) umfasst, wobei mittels der zweiten Anschlaganordnung (23) eine zweite Anschlagebene (24) zwischen dem ersten und zweiten Fördermittel (5,6) ausbildbar ist und wobei die zweite Anschlaganordnung (23) bezüglich der Rotationsachse (R) der ersten Anschlaganordnung (9) gegenüberliegend angeordnet ist.

12. Vorrichtung (1) nach Anspruch 11, **dadurch gekennzeichnet, dass** die zweite Anschlaganordnung (23) parallel bezüglich der ersten Förderebene (7) und quer zur Rotationsachse (R) verstellbar ausgebildet ist.

13. Vorrichtung (1) nach einem der Ansprüche 1 bis 12, **dadurch gekennzeichnet, dass** die Fördereinheit (4) zwischen dem ersten und zweiten Fördermittel (5,6) eine seitliche Zugangsöffnung (28) aufweist, wobei mittels der Zugangsöffnung (28) ein Zuführen des Bauteils (2) zwischen der ersten und zweiten Förderebene (7,8) quer zur Rotationsachse (R) ermöglicht ist.

## Claims

1. A device (1) for turning plate-shaped components (2), in particular metal sheets, comprising
- a rotation unit (3); wherein the rotation unit (3) is configured to turn the component (2) with respect to a rotational axis (R) in a turning process;
- a conveyor unit (4), wherein the conveyor unit (4) is accommodated in the rotation unit (3) and is rotatable with respect to the rotational axis (R) by means of the rotation unit (3), and wherein the conveyor unit (4) comprises at least one first conveying means (5) and at least one oppositely arranged second conveying means (6), and
wherein a first conveying plane (7) is defined by means of the first conveying means (5) and a second conveying plane (8) arranged parallel to the first conveying plane (7) is defined by means of the second conveying means (6), and;
wherein the conveyor unit (4) is configured to receive the component (2) between the first and second conveying plane (7, 8), so that the component (2) is received between the first and second conveying means (5, 6) for the turning process; wherein the conveyor unit (4) comprises at least one first stop arrangement (9) for supporting the component (2) in the turning process and a first stop plane (10) is formable between the first and second conveying means (5, 6) by means of the stop arrangement (9), wherein the stop arrangement (9) is adjustable in parallel to the first conveying plane (7) and transversely to the rotational axis (R), and is adjustable with respect to a direction (11) perpendicular to the first conveying plane (7),
**characterized in that** the conveyor unit (4) comprises a guide arrangement (12), wherein the stop arrangement (9) is coupled to the guide arrangement (12) in such a way that when the stop arrangement (9) is adjusted - in parallel with respect to the first conveying plane (7) and transversely - in the direction of the rotational axis (R), the stop arrangement is adjustable with respect to the perpendicular direction (11) by means of the guide arrangement (12).

2. The device (1) according to claim 1, **characterized in that** at least one of the conveying means (5, 6) comprises individual rod-shaped conveying elements (13); wherein the rod-shaped conveying elements (13) are arranged transversely to the rotational axis (R).

3. The device (1) according to claim 1 or 2, **characterized in that** the stop arrangement (9) comprises individual stop elements (14), wherein the stop elements (14) are arranged perpendicular to the first conveying plane (7) and are arranged at a distance from one another with respect to a direction parallel to the rotational axis (R).

4. The device according to claims 2 and 3, **characterized in that** the individual stop elements (14) can each be guided between the rod-shaped conveying elements (13).

5. The device (1) according to one of claims 1 to 4, **characterized in that** at least one of the two conveying means, comprising the first and second conveying means (5, 6), is configured to be transferable relative to its conveying plane along a conveying direction (F) in the conveyor unit, so that the component (2) can be moved together with the transferable conveying means.

6. The device (1) according to claim 5, **characterized in that** the conveyor unit (4) has at least one deflection arrangement (15), wherein the at least one transferable conveying means is deflectable by means of the deflection arrangement (15) in such a way that it can be distanced from the respective other, opposite conveying means.

7. The device (1) according to claim 5 or 6, **characterized in that** the at least one transferable conveying means is configured to be transferable by means of a traction drive (17).

8. The device (1) according to one of claims 5 to 7, **characterized in that** the transferable conveying means has brush-like elements (41), wherein the brush-like elements are provided for receiving the component (2).

9. The device (1) according to one of claims 1 to 8, **characterized in that** the stop arrangement (9) is arranged over a total length (18) of the conveyor unit (4) with respect to a direction parallel to the rotational axis (R).

10. The device (1) according to one of claims 2 to 8, **characterized in that** the stop arrangement (9) extends over at least two rod-shaped conveying elements (13) with respect to a direction parallel to the rotational axis (R).

11. The device (1) according to one of claims 1 to 10, **characterized in that** the conveyor unit (4) comprises a second stop arrangement (23), wherein a second stop plane (24) can be formed between the first and second conveying means (5, 6) by means of the second stop arrangement (23), and wherein the second stop arrangement (23) is arranged opposite the first stop arrangement (9) with respect to the rotational axis (R).

12. The device (1) according to claim 11, **characterized in that** the second stop arrangement (23) is configured to be adjustable in parallel with respect to the first conveying plane (7) and transversely to the rotational axis (R).

13. The device (1) according to one of claims 1 to 12, **characterized in that** the conveyor unit (4) has a lateral access opening (28) between the first and second conveying means (5, 6), wherein the access opening (28) allows for the component (2) to be fed between the first and second conveying planes (7, 8) transversely to the rotational axis (R).

## Revendications

1. Dispositif (1) permettant de retourner des composants (2) en forme de plaque, en particulier des tôles, comprenant :
- une unité de rotation (3) ; dans lequel l'unité de rotation (3) est conçue pour retourner le composant (2) par rapport à un axe de rotation (R) dans une opération de retournement ;
- une unité de transport (4), dans lequel l'unité de transport (4) est logée dans l'unité de rotation (3) et peut tourner par rapport à l'axe de rotation (R) au moyen de l'unité de rotation (3), et dans lequel l'unité de transport (4) comprend au moins un premier moyen de transport (5) et au moins un second moyen de transport (6) disposé à l'opposé, et dans lequel un premier plan de transport (7) est défini par l'intermédiaire du premier moyen de transport (5) et un second plan de transport (8) agencé parallèlement au premier plan de transport (7) est défini par l'intermédiaire du second moyen de transport (6), et ;
dans lequel l'unité de transport (4) est conçue pour recevoir le composant (2) entre les premier et second plans de transport (7, 8), de telle sorte que le composant (2) soit logé entre les premier et second moyens de transport (5, 6) pour l'opération de retournement ;
dans lequel l'unité de transport (4) comprend au moins un premier agencement de butée (9) pour l'appui du composant (2) dans le processus de retournement, et un premier plan de butée (10) peut être formé entre les premier et seconds moyens de transport (5, 6) par l'intermédiaire de l'agencement de butée (9), dans lequel l'agencement de butée (9) peut être réglé parallèlement par rapport au premier plan de transport (7) et transversalement par rapport à l'axe de rotation (R), et peut être réglé par rapport à une direction (11) perpendiculaire au premier plan de transport (7), **caractérisé en ce que** l'unité de transport (4) comprend un agencement de coulisse (12), dans lequel l'agencement de butée (9) est couplé à l'agencement de coulisse (12), **en ce que** lors du réglage de l'agencement de butée (9) - parallèle au premier plan de transport (7) et
transversalement - dans la direction de l'axe de rotation (R), l'agencement de butée peut être réglé par l'intermédiaire de l'agencement de coulisse (12) par rapport à la direction verticale (11).

2. Dispositif (1) selon la revendication 1, **caractérisé en ce qu'**au moins l'un des moyens de transport (5, 6) comprend des éléments de transport (13) individuels en forme de barre ; dans lequel les éléments de transport (13) en forme de barre sont agencés transversalement par rapport à l'axe de rotation (R).

3. Dispositif (1) selon la revendication 1 ou 2, **caractérisé en ce que** l'agencement de butée (9) comprend des éléments de butée individuels (14), dans lequel les éléments de butée (14) sont agencés perpendiculairement par rapport au premier plan de transport (7) et sont agencés espacés les uns des autres par rapport à une direction parallèle à l'axe de rotation (R).

4. Dispositif selon les revendications 2 et 3, **caractérisé en ce que** les éléments de butée individuels (14) peuvent être guidés respectivement entre les éléments de transport (13) en forme de barre.

5. Dispositif (1) selon l'une quelconque des revendications 1 à 4, **caractérisé en ce qu'**au moins l'un des deux moyens de transport, comprenant les premier et second moyens de transport (5, 6), est réalisé de manière à pouvoir être déplacé par rapport à son plan de transport le long d'une direction de transport (F) dans l'unité de transport, de sorte que le composant (2) puisse être déplacé conjointement avec le moyen de transport pouvant être déplacé.

6. Dispositif (1) selon la revendication 5, **caractérisé en ce que** l'unité de transport (4) présente au moins un agencement de déviation (15), dans lequel le au moins un moyen de transport pouvant être déplacé peut être dévié au moyen du dispositif de déviation (15) de telle sorte qu'il puisse être éloigné de l'autre moyen de transport opposé.

7. Dispositif (1) selon la revendication 5 ou 6, **caractérisé en ce qu'**au moins un moyen de transport pouvant être déplacé est conçu de manière à pouvoir être déplacé au moyen d'un mécanisme de traction (17).

8. Dispositif (1) selon l'une quelconque des revendications 5 à 7, **caractérisé en ce que** le moyen de transport pouvant être déplacé comprend des éléments en forme de brosse (41), dans lequel les éléments en forme de brosse sont prévus pour recevoir le composant (2).

9. Dispositif (1) selon l'une quelconque des revendications 1 à 8, **caractérisé en ce que** l'agencement de butée (9) est agencé par rapport à une direction parallèle à l'axe de rotation (R) sur une longueur totale (18) de l'unité de transport (4).

10. Dispositif (1) selon l'une quelconque des revendications 2 à 8, **caractérisé en ce que** l'agencement de butée (9) s'étend sur au moins deux éléments de transport (13) en forme de barre par rapport à une direction parallèle à l'axe de rotation (R).

11. Dispositif (1) selon l'une quelconque des revendications 1 à 10, **caractérisé en ce que** l'unité de transport (4) comprend un second agencement de butée (23), dans lequel un second plan de butée (24) peut être formé entre les premier et second moyens de transport (5, 6) par l'intermédiaire du second agencement de butée (23), et dans lequel le second agencement de butée (23) est agencé à l'opposé par rapport à l'axe de rotation (R) du premier agencement de butée (9).

12. Dispositif (1) selon la revendication 11, **caractérisé en ce que** le second agencement de butée (23) est conçu de manière à être réglable parallèlement par rapport au premier plan de transport (7) et transversalement par rapport à l'axe de rotation (R).

13. Dispositif (1) selon l'une quelconque des revendications 1 à 12, **caractérisé en ce que** l'unité de transport (4) présente une ouverture d'accès latérale (28) entre les premier et second moyens de transport (5, 6), dans lequel l'ouverture d'accès (28) permet de guider le composant (2) entre les premier et second plans de transport (7, 8) transversalement par rapport à l'axe de rotation (R).
